# EUROPEAN PATENT APPLICATION

(11) **EP 4 421 683 A1**
(43) Date of publication of application: **28.08.2024**
(21) Application number: 23305255.4
(22) Date of filing: 24.02.2023
(51) Int. Cl.: G06N 3/045, G06F 21/55, G06F 7/76

(54) **SECURE COMPUTER-IMPLEMENTED METHOD FOR PREVENTING A RECOVERY OF EMBEDDED DATA WITHIN A NEURAL NETWORK MODEL**

(71) Applicant: THALES DIS FRANCE SAS, 92190 Meudon (FR)
(72) Inventor: LI, Qiang, 641517 Singapore (SG)
(74) Representative: Quintero Romero, Manuel

(57) **Abstract**

The invention relates to a secure computer-implemented method (1) for preventing a recovery of embedded data (d) within an neural network model (NN), said neural network model (NN) comprising a plurality of layers (L), each layer (L) having a related matrix of parameters (M) and being configured to receive at least one input tensor (t1), wherein said secure computed implemented method (1) comprises:
- for at least one layer (L), permuting sets (s) of parameters (P) within its related matrix of parameters (M) so as to change their initial positions (p) in said matrix of parameters (M),
- applying said matrix of permuted parameters (M') to the at least one input tensor (t1) so as to generate an output tensor (t2').

## Description

### FIELD OF THE INVENTION

The present invention relates to a secure computer-implemented method for preventing a recovery of embedded data within a neural network model.

### BACKGROUND OF THE INVENTION

Nowadays, artificial intelligence is used in many different technologies. In particular, artificial intelligence uses pre-trained models such as neural network models, such a ResNet^{™} model, MobileNet^{™} model, etc., for edge devices or Smartphones applications for example.

One problem of these neural network models is that they can be used as malware carrier. Indeed, a hacker can create a malware code, chunk it into bytes, embed these bytes as embedded data into a pre-trained neural model and push it on the public internet for example via GitHub^{™}. When developers download the neural network model that has been tampered, into an inference machine and install the neural network model onto an inference system, the hacker can compromise the inference system of the company to reconstruct the malware on the inference system. The malware code can then be used to infiltrate into the company network/systems to expand the hacker scope of compromise. As the inference of the neural network model can be shared with customers of the company, the hacking can also expand to the customers networks/systems. One way of embedding a malware code into a neural network model is described in in the published "EvilModel paper: Hiding Malware Inside of Neural Network Models" written by Zhi Wang, Chaoge Liu, Xiang Cui, reference arXiv:2107.08590v4 [cs.CR] 5 Aug 2021. Usually, the bytes of the malware code are data that are embedded in the least significant bytes of the neural network model parameters that are of a float data type. In a non-limitative embodiment, a float is stored as four bytes. As the bytes of the malware code change the least significant bytes of the parameters of the neural network model, it doesn't change the neural network model's accuracy much. So, this type of attack is not detectable. Moreover, this type of malware code evades the security scans by common anti-virus engines.

It is an object of the invention to provide a secure computer-implemented method for preventing a recovery of embedded data within a neural network model, which resolves the problem above-stated.

### SUMMARY OF THE INVENTION

To this end, it is provided a secure computer-implemented method for preventing a recovery of embedded data within an neural network model, said neural network model comprising a plurality of layers, each layer having a related matrix of parameters and being configured to receive at least one input tensor, wherein said secure computed implemented method comprises:
- for at least one layer, permuting sets of parameters within its related matrix of parameters so as to change their initial positions in said matrix of parameters,
- applying said matrix of permuted parameters to the at least one input tensor so as to generate an output tensor.

As we will see in further details, because of the permutation of sets of parameters, this will increase the difficulty level of the hacker to reassemble the malware code, as he/she is not aware of the permutation and how it is done.

According to non-limitative embodiments of the invention, the secure computer-implemented method further comprises the following characteristics.

In a non-limitative embodiment, the neural network model is a deep neural network model.

In a non-limitative embodiment, the permutation of set(s) of parameters is performed for a plurality of layers.

In a non-limitative embodiment, said output tensor is an intermediate output tensor to be fed as an input tensor to a subsequent layer or is a last output tensor of a last layer of said neural network model.

In a non-limitative embodiment, a set of parameters comprises one or a plurality of parameters, a set of parameters being of the type of a weight.

In a non-limitative embodiment, a set of parameters comprise one or a plurality of parameters, a set of parameters being of the type of a bias.

In a non-limitative embodiment, said computer-implemented method further comprises reordering the parameters of a matrix of parameters related to a subsequent layer according to the permutation of sets of parameters of a previous layer, before applying said matrix of parameters to said at least one input tensor of said subsequent layer. In a non-limitative embodiment, when the last layer(s) of said neural network model is configured to generate a last output tensor with a plurality of elements, said secure computer-implemented method further comprises re-ordering the sets of parameters of the matrix of parameters of the last layer(s) so that the elements of the output tensor generated by this last layer(s) have a same ordering as an initial ordering.

In a non-limitative embodiment, the layers are convolutional layers, or fully connected layers, or batch-normalization layers, or any combination of these different types of layers.

In a non-limitative embodiment, the related matrix of parameters of a convolutional layer is of dimension [filters, input channels, kernelₖ, with k = 2 to N, N integer], a filter comprising a plurality of slices, said filter comprising a dimension [input channels, kernel₁, kernel₂, ...].

In a non-limitative embodiment, when a layer is a convolutional layer, a set of parameters is a filter and the permutation of sets of parameters is performed by permuting at least two filters of the matrix of parameters.

In a non-limitative embodiment, when a layer is a convolutional layer, the reordering of the parameters of a matrix of parameters related to a subsequent layer is performed by re-ordering the slices of the filters of said subsequent layer according to the re-ordering of output channels of the output tensor of the previous layer.

In a non-limitative embodiment, for a fully connected layer, the matrix of parameters is of dimension [n, m], with n a number of rows corresponding to a number of input features of said fully connected layer and m a number of columns corresponding to a number of output features of said fully connected layer, with the total number of parameters being n x m , each output feature being obtained by filtering said input features by one of m filters of dimension [n, 1].

In a non-limitative embodiment, when a layer is a fully connected layer, the permutation of sets parameters is performed by permuting at least two of the m filters which leads to a permutation of output features.

In a non-limitative embodiment, when a layer is a fully connected layer, the reordering of the parameters of a matrix of parameters related to a subsequent layer is the re-ordering of the rows of said matrix of parameters, according to the permutation of sets of parameters of a previous layer.

In a non-limitative embodiment, for a convolutional layer, a bias is associated with a filter and the matrix of parameters that are biases is a vector, and there is a permutation of the corresponding biases within the vector alongside the permutation of the at least two filters to match their permutation.

In a non-limitative embodiment, for a fully-connected layer, a bias is associated with a filter and the matrix of parameters that are biases is a vector of dimension m with m a number of output features of said fully connected layer, and there is a permutation of the corresponding biases within the vector alongside the permutation of the at least two filters f to match their permutation.

In a non-limitative embodiment, all or parts of the parameters of the matrix of parameters related to a subsequent layer according to the permutation of sets of parameters of a previous layer.

In a non-limitative embodiment, the arrangement of the dimension [filters (f), input channels (i_ch), kernelₖ, with k = 2 to N, N integer] is in any order.

There is also provided a computer-program product for a computer, comprising a set of instructions, which when loaded into said computer, causes the computer to carry out the secure computer- implemented method as characterized in any of the preceding characteristics.

There is also provided a non-transitory machine-readable medium having instructions stored therein, which when executed by a processor, cause the processor to perform the secure computer- implemented method as characterized in any of the preceding characteristics.

There is also provided a first computer-implemented method, wherein said first computer-implemented method comprises:
- downloading a neural network model,
- applying said secure computer-implemented method according to any of the preceding characteristics on said neural network model,
- training said neural network model,
- stored said trained neural network model in a memory.

In a non-limitative embodiment, the neural network model that is downloaded is a pre-trained neural network model. In this case, the step of training said neural network model is a step of retraining said neural network model.

There is also provided a second computer-implemented method, wherein said second computer-implemented method comprises:
- downloading a neural network,
- applying said secure computer-implemented method according to any of the preceding characteristics on said neural network,
- running said neural network model.

There is also provided a third computer-implemented method, wherein said third computer-implemented method comprises:
- applying said secure computer-implemented method according to any of the preceding characteristics on a neural network that is stored in a memory,
- distributing or publishing said neural network model.

### BRIEF DESCRIPTION OF THE DRAWINGS

Some embodiments of methods and/or system in accordance with embodiments of the present invention are now described, by way of example only, and with reference to the accompanying drawings, in which:
- Figure 1 is a schematic organization chart of a secure computer-implemented method for preventing a recovery of embedded data within a neural network model, said neural network model comprising a plurality of layers, each layer having a related matrix of parameters according to a non-limitative embodiment of the invention,
- Figure 2 illustrates a schematic diagram of the AlexNet^{™} neural network model which is an example of a neural network model, said neural network comprising convolutional layers and fully connected layers,
- Figure 3 illustrates an input tensor of a layer of the neural network model of figure 2, a matrix of parameters corresponding to said layer, and an output tensor of said layer, said layer being a convolutional layer, according to a non-limitative embodiment,
- Figure 4 illustrates the permutation of sets of parameters of the layer of figure 3, according to a non-limitative embodiment,
- Figure 5 illustrates a reordering of the set of parameters of a matrix of parameter related to a subsequent layer of the layer of figure 4, according to a non-limitative embodiment,
- Figure 6 shows a simplified version, for illustration purpose, of two fully connected layers of the neural network model of figure 2, and their corresponding matrices of parameters, according to a non-limitative embodiment,
- Figure 7 illustrates the permutation of sets of parameters of a matrix of parameters of a layer of figure 6, according to a non-limitative embodiment,
- Figure 8 is another representation of the matrix of parameters of the layer of figure 7, where some columns have been permuted, according to a non-limitative embodiment,
- Figure 9 illustrates a reordering of the set of parameters of a matrix of parameter corresponding to a subsequent layer of the layer of figure 7, according to a non-limitative embodiment,
- Figure 10 is another representation of the matrix of parameters of the layer of figure 9 where some rows have been permuted, according to a non-limitative embodiment,
- Figure 11 illustrates a layer of figure 6 where the input features have been permuted, according to a non-limitative embodiment,
- Figure 12 illustrates the corresponding matrix of parameters of the layer of figure 11 where some sets of rows have been permuted, according to a non-limitative embodiment,
- Figure 13 illustrates the subsequent layer of figure 9 where output features are permuted, according to a non-limitative embodiment,
- Figure 14 illustrates a first computer-implemented method for applying the secure computer-implemented method of figure 1, according to a non-limitative embodiment,
- Figure 15 illustrates a second computer-implemented method for applying the secure computer-implemented method of figure 1, according to a non-limitative embodiment.
- Figure 16 illustrates a third computer-implemented method for applying the secure computer-implemented method of figure 1, according to a non-limitative embodiment.

### DESCRIPTION OF EMBODIMENTS OF THE INVENTION

In the following description, well-known functions or constructions by the man skilled in the art are not described in detail since they would obscure the invention in unnecessary detail.

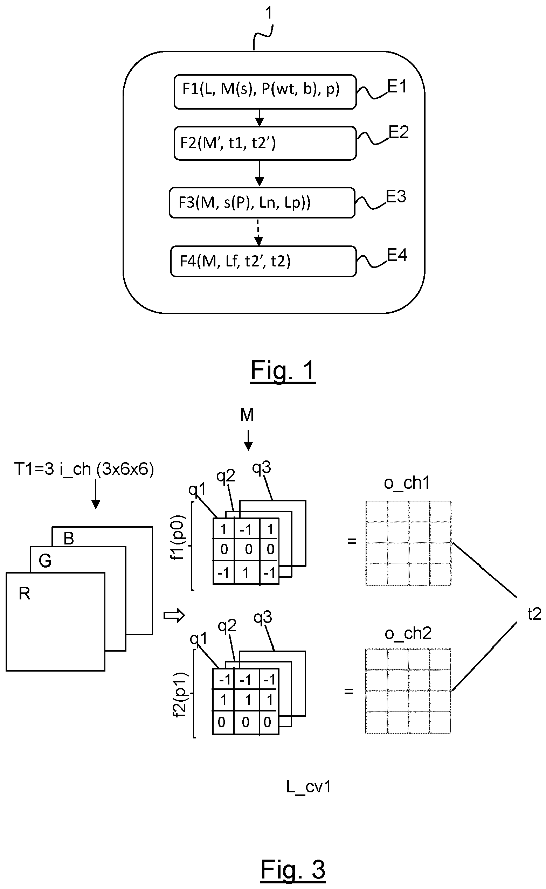

The present invention relates to a secure computer-implemented method 1 for preventing a recovery of embedded data d within a neural network model NN, said secure computer-implemented method 1 being described in reference to figures 1 to 13. In a non-limitative embodiment, the neural network model NN is a deep neural network model NN. The neural network model NN is also called NN model in the following.

A neural network model NN is designed by a (some) developer(s) or a model provider(s).

A neural network model NN comprises a plurality of layers L, each layer L having a related matrix of parameters M. A matrix of parameters M can be of 1 dimension (it then called vector of parameters) or of a plurality of dimensions, for example a 2D dimension. The parameters are referred to as P.

In a non-limitative embodiment, the parameters P are of the type of a weight wt.

In another non-limitative embodiment, the parameters P are of the type of a bias b. In a non-limitative embodiment, a bias b is configurable : a developer can set the bias b to false for a layer L which means that there will be no bias b used for this layer L in the neural network model NN.

In non-limitative embodiments, these parameters P are float, or integer data types. A layer L has at least one input tensor t1 and at least one output tensor t2.

A NN model has at least one input T1 and at least one final output T2. In a non-limitative embodiment, a NN model has a plurality of inputs T1 and a plurality of final outputs T2. In the following, a NN model with one final output T2 is taken as a non-limitative example.

In the following, t1 is referred to as an input tensor of one layer L. It is to be noted that the input tensor(s) t1 of the first layer of the NN model composed the input T1 of the NN model.

In the following, t2 is referred to as an output tensor of one layer L of the NN model that has been originally designed.

In the following, t2' is referred to as the output tensor of one layer L of the NN model which has undergone a parameters' permutation as described later in the following. The output tensor t2' comprises one or a plurality of elements.

In the following, a previous layer Lp means a layer that directly precedes a current layer L and whose outputs are used as inputs for the current layer L.

In the following, a subsequent layer Ln means a layer that directly follows a current layer L and whose inputs are fed with the outputs of the current layer L.

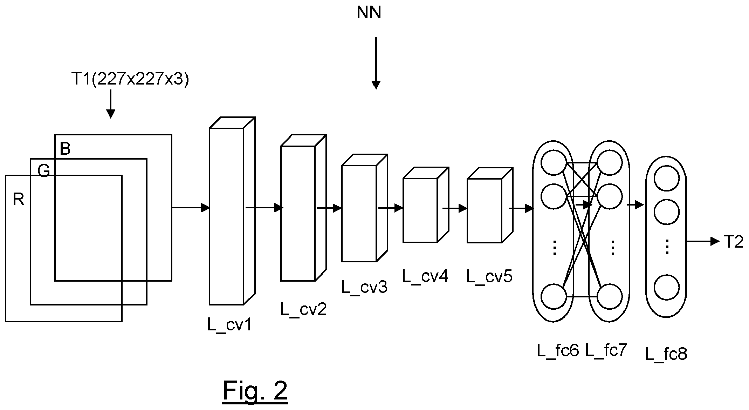

In a non-limitative embodiment illustrated in figure 2, the original neural network model NN is an AxelNet^{™} model. This AxelNet^{™} model comprises five convolutional layers L_cv (illustrated L_cv1 to L_cv5) and three fully connected layers L_fc (illustrated L_fc6 to L_fc8). The input T1 of the NN model is applied to the first convolutional layers L_cv1. It is an RGB image of dimension 227x227x3. The final output T2 is also illustrated.

The design of a neural network model NN defines the number of layers L, the corresponding matrix of parameters M, the position of the parameters P within a matrix of parameters M, i.e., their initial order within the matrix of parameters M. In the following, a matrix of parameters M is also referred to as a matrix M.

The embedded data d can be bytes of a malware code that have been embedded into the original neural network model NN unbeknownst to the developer or model provider. By "original", one means the neural network model NN that has been designed by for example a (some) developer(s) or a model provider(s).

A software can access the neural network model NN and allows the extraction of embedded data d from said NN model. In non-limitative embodiments, the software that can access the neural network model NN is an inference engine (also called inference machine), an internet browser, a library, or a script. To avoid this recovery of embedded data d, the secure computer-implemented method 1 is used.

The secure computer-implemented method 1 comprises the following steps as illustrated in figure 1.

In step E1 illustrated F1(L, M(s), P(wt, b), p)), for at least one layer L, sets s of parameters P within its corresponding matrix of parameters M are permuted so as to change their initial positions p in said matrix of parameters M. In a non-limitative embodiment, the permutation is performed randomly. The terms permutation, swapping and shuffling will be used indifferently in the following.

The bytes of the malware code are embedded data d inside the parameters P. Because of the swapping of the set s of parameters P, it increases the hacker's difficulty level in the malware code extraction as he/she will be only aware of the initial order of the sets s of parameters P that has been predefined (i.e., originally designed). In a non-limitative embodiment, the permutation of sets s of parameters P is performed for a plurality of layers L.

A set s of parameters P comprises one or a plurality of parameters P.

A set s of parameters P is of the type of a weight wt or of the type of a bias b.

In non-limitative embodiments, the layers L are convolutional layers L_cv, or fully connected layers L_fc, or batch-normalization layers L_bn, or any combination of these different types of layers L.

Once the sets s of parameters P have been permuted, one obtains a matrix of permuted parameters M', also called matrix M' or permuted matrix M' in the following. In a non-limitative embodiment, this step E1 is executed for a plurality of layers L.

In step E2 illustrated F2(M', t1, t2'), the matrix of permuted parameters M' is applied to the at least one input tensor t1 of said at least one layer L so as to generate an output tensor t2'. When the layer L comprises a plurality of input tensors t1, the matrix M' is applied to all the input tensors t1 so as to generate the same number of elements for the output tensor t2'.

In non-limitative embodiments, the output tensor t2' is an intermediate output tensor to be fed as an input tensor referred to as t1 to a subsequent layer Ln, or is a last output tensor of a last layer Lf of said neural network model NN. The output tensor t2' of the last layer of the NN model is the final output T2 of the NN model. It is also called the last output tensor t2' or the final output tensor t2'.

In a non-limitative embodiment, this step E2 is executed for a plurality of layers L. In this case, the output tensors t2' of these layers L generated after permutation within different layers L are different from one layer L to another layer L.

In a non-limitative embodiment, step E1 and step E2 are applied on more than one layer L. In a non-limitative variant of embodiment, step E1 and step E2 are applied on more than two layers L. When one applies a permutation on a lots of layers L, it maximizes the difficulty for a hacker to extract the malware compared to only change two layers L of the NN model. In extreme cases, the malware data may not be embedded in these two layers L where parameters are permuted, when only two layers L are concerned with the permutation for example.

It is to be noted that these steps E1 and E2 can be applied for the last layer(s) Lf of the NN model. Hence, for the last layer Lf, there are two options : keep the original NN model design final output T2 order or reorder its parameters P so that the final output T2 will not match the original NN model design.

In a non-limitative embodiment, in step E3 illustrated F3(M, s(P), Ln, Lp)), the parameters P of a matrix of parameters M related to a subsequent layer Ln are reordered according to the permutation of sets s of parameters P of a previous layer Lp, before applying said matrix of parameters M to said a least one input tensor t1 of said subsequent layer Ln.

Either parts of the parameters P are reordered, or all the parameters P are reordered depending on the previous permutation. It ensures that the subsequence layer sets s of parameters P are matched with the order of the elements of the output tensor t2' from the previous layer Lp. The order of the elements of the output tensor t2' from the previous layer Lp has been reordered due to step E1.

If the step E3 is not performed, the subsequent layer Ln will not generate the correct output tensor t2' that matches the corresponding output tensor t2 in the original NN model.

In a non-limitative embodiment, this step E3 is executed for a plurality of subsequent layers Ln when there is a change (i.e. a permutation) in a plurality of previous layers Lp.

It is to be noted that one can apply steps E1, E2 and E3 to any layers L, including the last layer(s) Lf.

In a first non-limitative embodiment, one may keep the original NN model output order, that is to say the same ordering as an initial ordering of the elements of the last output tensor t2 (which is the final output T2) within the original NN model. In a second non-limitative embodiment, one may keep the change in the order. In this case, the end-user or the inference machine needs to be informed to make sure correct inference. It is a design decision.

To keep the original NN model output order, in a non-limitative embodiment, in step E4 illustrated F4(M, Lf, t2', t2), when the last layer(s) Lf of said neural network model NN is configured to generate a last output tensor t2' with a plurality of elements, the sets s of parameters P of the matrix of parameters M of the last layer(s) Lf of the neural network model NN are reordered so that the elements of the last output tensor t2' generated by this last layer(s) Lf have a same ordering as an initial ordering of the elements of the last output tensor t2 (which is the final output T2) within the original NN model, the initial ordering being the one when there is no permutation of any sets s of parameters P. In other words, the initial ordering is the one originally designed. This step E4 is performed if the steps E1 and E2 have been applied beforehand to this last layer(s) Lf.

It is to be noted that the secure computer-implemented method 1 can be performed by a computer program product. Said computer program product comprises a set of instructions, which when loaded into said computer, causes the computer to carry out the secure computer-implemented method 1. Hence, the computer program product is embodied on the non-transitory computer readable storage medium having a set of instructions stored therein.

The computer program product is also referred to as a program, software, software application, or code. A computer program product can be deployed in any form, including, but not limited to, as a stand-alone program, or as a module, component, subroutine, or other unit suitable for use in a computing environment. In a non-limitative example, when it is a stand-alone program, it is integrated into an inference engine as a plugin or feature.

In non-limitative embodiments, the instructions also called program instructions, may be, assembler instructions, instruction-set-architecture (ISA) instructions, machine instructions, microcode, firmware instructions, configuration data for integrated circuitry, or either source code, or object code written in any combination of one or more programming languages, including compiled of interpreted languages, such as procedural programming language or object-oriented programming language. Hence, in a non-limitative example, the program instructions are an executable script file like Python^{™} script.

In non-limitative embodiments, the non-transitory computer readable storage medium is an electronic storage device, a magnetic storage device, an optical storage device, an electromagnetic storage device, a semiconductor storage device, or any suitable combination of the foregoing. In non-limitative examples, the computer readable storage medium is a read-only memory ROM or the like such as PROM, an erasable programmable read-only memory EPROM or the like such as EEPROM, a Flash memory, a solid-state memory, a DVD, and the like.

While the non-transitory computer readable storage medium is shown as in a non-limitative embodiment to be a single medium, the term non-transitory computer readable storage medium should be taken to include a single medium or multiple media.

A computer readable storage medium as used herein, is not to be construed as being a transitory signal per se, such as a radio wave, an electromagnetic wave propagating through a waveguide or other transmission media, or an electrical signal transmitted through a wire.

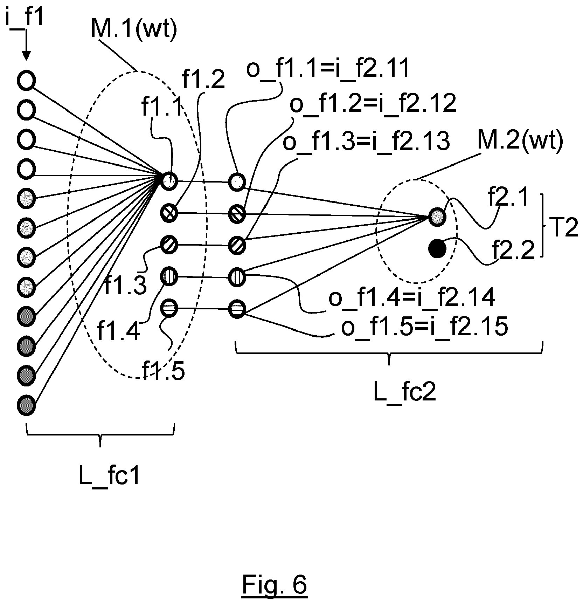

The different steps of the secure computer-implemented method 1 are now explained when applied to firstly a convolutional layer L_cv in reference to figures 3 to 5, and secondly to a fully connected layer L_fc in reference to figures 6 to 13.

### • Convolutional layer L cv.

When a layer L is a convolutional layer L_cv, a set s of parameters P is a filter f. It means that a filter f is composed of all the parameters P of a set s.

In a non-limitative embodiment, the corresponding matrix of parameters M of a convolutional layer L_cv is of dimension [filters f, input channels i_ch, kernelₖ, with k = 2 to N, N integer]. This applied for the parameters P that are weights wt. It is to be noted that the arrangement in the dimension could be different. Hence, in another non-limitative embodiment, we could have a dimension [filters f, kernelₖ, with k = 2 to N, N integer, input channels i_ch]. Hence, the dimension can be in any order.

Hence, the matrix of parameters M can be considered as a bank of filters f, with at least one filter f.

A filter f comprises a plurality of slices q and is of dimension [input channel i_ch, kernel₁, kernel₂, ...].

As illustrated in figure 3, in a non-limitative example, a convolutional layer L_cv1 has a matrix M of parameters of dimension [2, 3, 3, 3] with 2 the numbers of filters f (noted f1 and f2) and 3 the number of input channels i_ch. Each filter f has tree slices q (noted q1, q2 and q3). The dimension of the two filters f is [1, 3,3,3]. They have the same dimension.

In a non-limitative example NN model illustrated in figure 3, the input T1 of the NN model is composed of 3 input channels i_ch which are RGB channels. The input T1 is the input tensor t1 of the first layer (referred to as L_cv1) which is a convolutional layer L_cv. The image RGB is of dimension [C, H, W] with C the number of input channels i_ch, W the length of width, H the length of height. In the non-limitative example of figure 3, the input T1 (RGB input image) is of dimension 3x6x6. It is to be noted that in a non-limitative embodiment, one can use a batch of RGB images, a batch defining a number of images, such as a batch of 10 images in a non-limitative example. The input T1 for the NN model is therefore composed of these 10 images and has a dimension of 10x3x6x6. In this case, the input T1 is of dimension [batch, C, H, W], and for each of the 10 images, there is an output tensor t2.

The filters f have a position p. In the non-limitative example, the first filter f1 has a position p0 and the second filter f2 has a position p1.

For step E1 above-described, the permutation of sets s of parameters P is performed by permuting at least two filters f of the matrix of parameters M, a set s of parameter P being here a filter f.

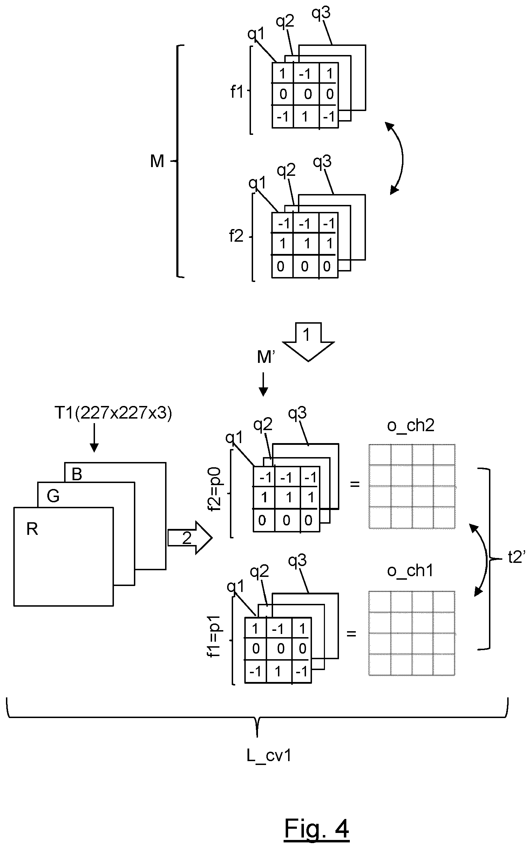

Hence, the filters f are reordered as illustrated in figure 4 and one obtains a matrix M' of permuted filters f. In the non-limitative example, filter f1 becomes filter f2 and filter f2 becomes filter f1. Thus, it means that all the parameters P of filter f1 are copied into position p1 and all the parameters P of filter f2 are copied into position p0. Hence, all the parameters P of filter f1 have been swapped with all the parameters P of the filter f2. It is to be noted that the order and the values of the parameters P within each filter f1 and f2 have been kept.

For step E2 above-described, the output tensor t2' of the convolutional layer L_cv1 is of dimension 2x4x4. It is composed of two elements that are output channels o_ch1 and o_ch2 of dimension 4x4, also called output feature maps.

It is to be noted that when a batch of 10 RGB images is used for the NN model, the dimension of the output tensor t2' is 10x2x4x4.

As illustrated in figure 4, the two output channels o_ch1, o_ch2 have been swapped due to the permutation of the filters f1 and f2. Hence, the result is that one has an output tensor t2' with two output channels o_ch1 and o_ch2 in another order different from the one pre-defined in the neural network model NN which has been originally designed.

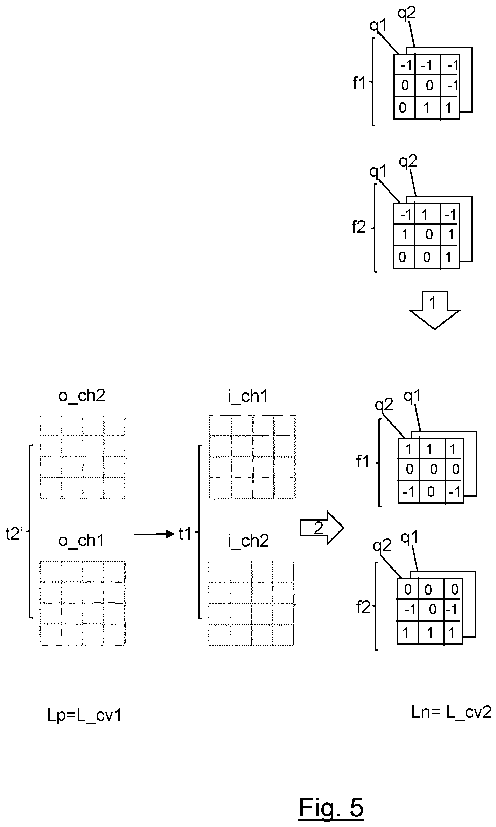

The two output channels o_ch1 and o_ch2 form two input channels i_ch for the subsequent layer Ln, here a convolutional layer L_cv2. Hence, the input tensor t1 of the subsequent layer L_cv2 is composed of two input channels i_ch1 and i_ch2 as illustrated in figure 5. In the non-limitative example, as there are two output channels o_ch for the layer L_cv1, there will be only two slices q per filter f for the subsequent layer L_cv2.

For step E3 above-described, as illustrated in figure 5, the reordering of the parameters P of a matrix of parameters M related to a subsequent layer Ln is performed by reordering the slices q of the filters f of said subsequent layer Ln according to the reordering of the output channels o_ch of the output tensor t2' of the previous layer Lp. Hence, as illustrated in figure 5 the slices q (here the 2 slices q1, q2) of the filters f1 and f2 of the subsequent layer L_cv2 are reordered (arrow 1) : the slice q1 takes the position of the slice q2, and the slice q2 takes the position of the slice q1. Then the filters f1 and f2 with the reordered slices q are applied (arrow 2) to the input tensor t1 coming from the previous layer L_cv1. In this non-limitative illustrated example, all the parameters P are reordered.

It permits to match according to the design of the original neural network model NN the right sets s of parameters P of the filters f with the input channels i_ch that form the input tensor t1 coming from the previous layer Lp.

For step E4 above-described, when we reach the final layer Lf of the neural network model NN, if it is a convolutional layer L_cv (also called final convolutional layer L_cv), in order for the final output T2 of the neural network model NN to remain unchanged, we can work out the correct output channels o_ch order and do a reordering of the output channels o_ch of the final output tensor t2' (which is the final output T2) to make sure their position matched the initial order in the design of the original neural network model NN and thus remained unchanged. This applies if the steps E1 and E2 have been applied beforehand to this last convolutional layer(s) L_cv.

It is to be noted that the same principle of permutation as described in step E1 applies for parameters P that are biases b. In this case, the corresponding matrix of parameters M of a convolutional layer L_cv is a vector of parameters which is a bias vector composed of a plurality of biases b.

One bias b is related to one filter f of the matrix M of weights wt. Hence, a filter f and a bias b form a pair. It is noted that some filter f may have no associated bias b. Unlike the matrix M of weights wt, the bias vector is applied onto the output channels o_ch. The bias vector comprises a number of biases b equal to the number of output channels o_ch. The use of the biases b being well-known by the man skilled in the art, it is not described here.

Hence, in a non-limitative example, for the matrix M = [2, 3, 3, 3], there is a bias vector of two bias b. For the bias vector, there is a permutation of the corresponding biases b within the bias vector alongside the permutation of the at least two filters f that are permuted to match their permutation. In other word, if a filter f in the matrix M of weights wt is permuted, its corresponding bias b is permuted with another bias b.

### • Fully connected layer L fc.

It is to be noted that a fully connected layer L_fc is called a Linear layer in Pytorch^{™}.

When a layer L is a fully connected layer L_fc, the matrix of parameters M is of dimension [n, m] with n a number of rows corresponding to a number of input features i_f of the fully connected layer L_fc and m a number of columns corresponding to a number output features o_f of the fully connected layer L_fc. This applies for the parameters P that are weights wt. A row or a column corresponds to a set s or parameters P.

That means that there are as many rows as there are input features i_f, and there are as many columns as there are output features o_f. The total number of parameters P is equal to n x m = output features o_f x input features i_f.

Hence, the output features o_f of the fully connected layer L_fc is a vector of m elements, and the input features i_f the fully connected layer L_fc is a vector with n elements.

Each output feature o_f is obtained by filtering the input features i_f by one of m filters f of dimension [n, 1]. Hence, there are as many filters f as there are output features o_f. Hence, the number of columns m of the matrix of parameters M correspond also to the number of filters f.

In a non-limitative example illustrated in figure 6, two fully connected layers L_fc1 and L_fc2 are illustrated with a corresponding matrix parameters M.1 of dimension [12,5] for the first fully connected layer L_fc1, and with a corresponding matrix parameters M.2 of dimension [5,2] for the second fully connected layer L_fc2.

The parameters P of the matrices of parameters M are weights wt.

Figure 6 illustrates a non-limitative example of an initial design of two fully connected layers L_fc1 and L_fc2 of an original neural network model NN.

As illustrated in figure 6, for the first fully connected layer L_fc1:
- the total number of weights wt is 12x5=60,
- the input features i_f1 equal to n=12,
- the output features o_f1 equal to m=5,
- there are m=5 filters f1 noted f1.1 to f1.5 in figure 6.
- each filter f1 has a dimension of [12, 1], it means that each filter f1 has 12 parameters P (here weights wt).

For each filter f1.1 to f1.5 there is one corresponding output feature o_f noted o_f1.1 to o_f1.5.

Each output feature o_f1 to o_f1.5 is obtained respectively by filtering the input features i_f1 by one of 5 filters f1.1 to f1.5 of dimension [12, 1].

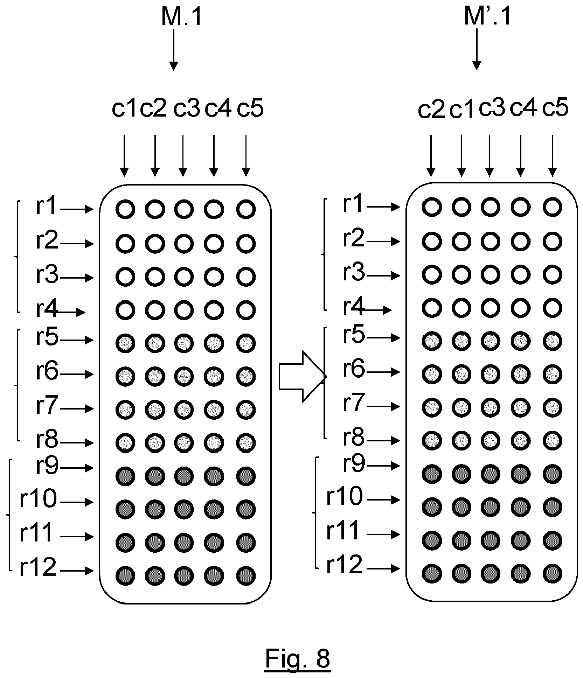

In terms of row and column, for the matrix M.1, there are 12 rows and 5 columns as illustrated in figure 8. Each column has 12 elements which are 12 parameters wt. These sets s of parameters wt are illustrated in figure 6, 7 and 9 the links between the input features i_f1 and the filters f1. As we can see, each input feature i_f1 has one link. For clarity of the figures, only the input features i_f1 onto which the first filter f1.1 is applied have been illustrated.

As illustrated in figure 6, for the second fully connected layer L_fc2:
- the total number of weights wt is 5×2=10,
- the input features i_f2 equal to n=5.
- the output features o_f2 equal to m=2,
- there are m=2 filters f2, noted f2.1 and f2.2,
- each filter f2 has a dimension of [5, 1], it means that each filter f2 has 5 parameters P (here weights).

The final output T2 is a vector of dimension [2] in the non-limitative example illustrated in figure 6.

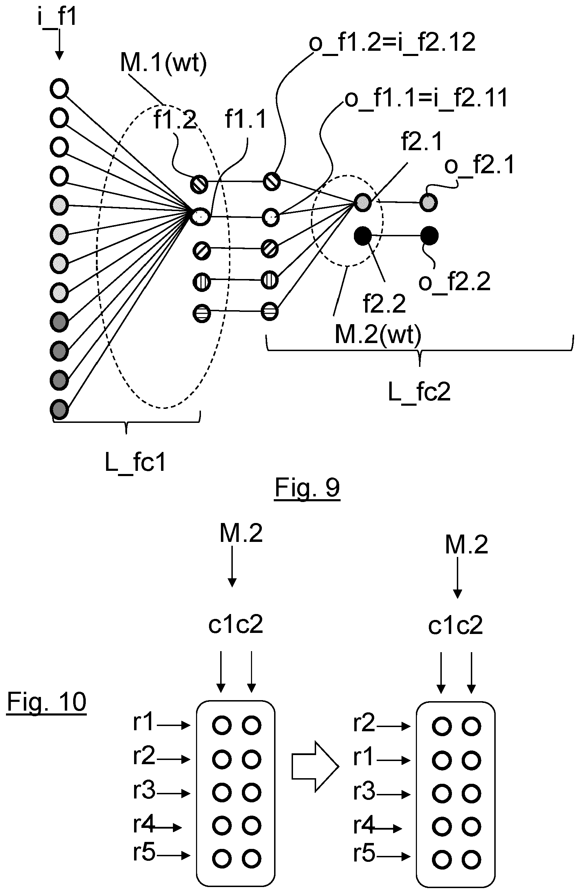

In terms of rows and columns, for the matrix M.2, there are 5 rows and 2 columns as illustrated in figure 10. Each column has 5 elements which are 5 parameters wt. These sets s of parameters wt are illustrated in figures 6, 7 and 9 by the links between the input features i_f2 and the filters f2. As we can see, each input feature i_f2 has one link.

It is to be noted that the input features i_f of a fully-connected layer L come from a previous layer Lp. In non-limitative embodiments, the previous layer Lp can be a convolutional layer L_cv or a fully connected layer L_fc. Of course, there can be other types of previous layers Lp.

The input features i_f are therefore the output features o_f of the previous layer Lp. If the previous layer Lp is a convolutional layer L_cv, the input features i_f is a flattened version of the outputs of the convolutional layer L_cv.

For the first fully-connected layer L_fc1, in the non-limitative illustrated example there are twelve input features i_f1 coming from a previous layer Lp that is a convolutional layer L_cv (not illustrated).

Thus, for the second fully-connected layer L_fc2, there are five input features i_f2 coming from a previous layer Lp which is here the first fully-connected layer L_fc1. There are five output features o_f1.1 to o_f1.5 that are fed as input features i_f (noted i_f2) to the second fully-connected layer L_fc2. So, for each of the 2 filters f2 of the second fully-connected layer L_fc2, there are 5 input features i_f. For the first filter f2.1, the input features i_f are noted i_f2.11 to i_f2.15. For clarity of the figures, only the input features i_f2 onto which the first filter f2.1 is applied have been illustrated.

As we will see in the following, if one wants to change the order of the output features o_f of a fully-connected layer L_fc, one has to permute the columns of its corresponding weight matrix M. Furthermore, it is to be noted that whenever there is a permutation in the previous layer Lp, for a subsequent fully-connected layer L_fc there is a need to reorder the rows of its corresponding weight matrix M to match the change in the previous layer Lp.

This means that for the intermediate fully-connected layers L_fc, it may need to permute both rows and columns.

For the last layer of the NN model, if we want to keep the original NN model's final output order, we only need to reorder the rows of its corresponding weight matrix M. The permutation of columns and rows are described in detail below.

For step E1 above-described, the permutation of sets s parameters P is performed by permuting at least two of the m filters f. Hence, a set of parameter P is here a filter f.

This permutation leads to a permutation of output features o_f as explained later.

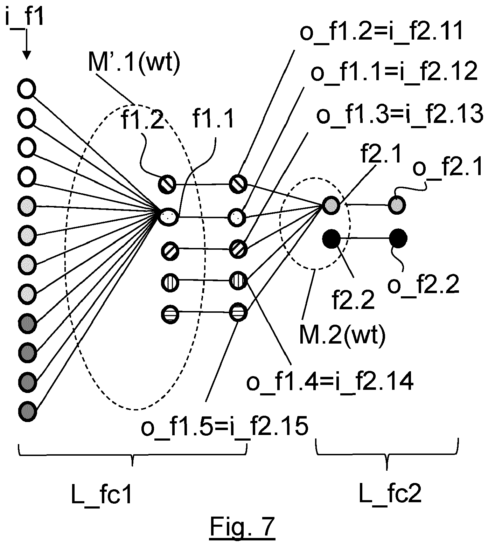

As illustrated in the non-limitative example of figure 7 compared with figure 6, for the first fully connected layer L_fc1, one has swapped the first filter f1.1 and the second filter f1.2, which means there is a reordering of the weight matrix M.1=[12,5] for the first fully connected layer L_fc1. It means that we have swapped the first two columns of this matrix M.1 so as to obtain a matrix M'.1 as illustrated in figure 8, where the column c1 and the column c2 have been swapped together. The parameters P of the two columns c1, c2 have been swapped together whereas their position within their own respective column has remained unchanged. It is to be noted that as there are 5 columns, there is a 5!=4x3x2x1 possible permutation patterns. One can understand how difficult it will be for a hacker to find the permutation pattern in order to recover the embedded data d.

For step E2 above-described, when applied the permuted matrix M'.1 to the twelve input features i_f1, the consequence of the permutation of the filters f1.1 and f1.2 in step E1 is also a permutation of the two corresponding output features o_f1.1 and o_f1.2 as illustrated in the figure 7.

It is to be reminded that the output feature o_f1.1 is obtained by applying the first filter f1.1 to the twelve input features i_f1 and the output feature o_f1.2 is obtained by applying the second filter f1.2 to the twelve input features i_f1. The other output features o_f1.3, o_f1.4 and o_f1.4 remain to their initial position as illustrated in figure 6.

As, these output features o_f1.1 to o_f1.5 are fed as input features i_f2 to each filter f2 of the second fully-connected layer L_fc2, here illustrated only for the first filter f2.1 in figure 7, it means that the input features i_f2.11 and i_f2.12 are consequently fed with the wrong configuration of output features o_f compared to their initial position of figure 6, as the input feature i_f2.11 is fed with the output feature o_f1.2 and the input feature i_f2.12 is fed with the output feature o_f1.1 as illustrated in figure 7.

If as illustrated in figure 7, for the subsequent layer L_fc2, the corresponding matrix of parameters M.2 is applied as such on the input features i_f2, the result won't be the same as the expected result of the initial design of the original neural network model NN.

Hence, to be sure that the input feature i_f2.11 is fed correctly with the right output feature o_f1.1 to the second fully-connected layer L_fc2, as illustrated in figure 9, we swapped the parameters of the matrix M.2 of the second fully-connected layer L_fc2. The same goes for the input feature i_f2.11 with the right output feature o_f1.2. Hence, here, In this setup of permutation of the filters f1.1 and f1.2, one has to reorder the rows of all filters f of the matrix M.2[n, m]=[5,2] of this second fully-connected layer L_fc2 before applying the matrix M.2 to the input features i_f2 of this second fully-connected layer L_fc2.

Hence, for step E3 above-described, in a first non-limitative embodiment, the reordering of the parameters P of a matrix of parameters M related to a subsequent layer Ln is the reordering of the rows of the matrix of parameters M, that is to say the elements of the filters f of said subsequent layer Ln, according to the permutation of sets s of parameters P of a previous layer Lp. The reordering of the rows means that the elements (i.e. parameters P) of a row shift position with the elements of another row.

It means that there is a reordering of the weight matrix M.2=[5,2] for the second fully connected layer L_fc2. Hence, in the non-limitative example illustrated in figure 9, the rows that are the two filters f2.1 and f2.2 of the second fully connected layer L_fc2 have been reordered in order to have the right parameter wt applied to the same input feature i_f2 as designed in the initial design of the original neural network NN. Figure 10 shows another illustration of the reordering of the rows of the matrix M.2. It illustrates such a reordering of the rows of the matrix of parameters M of the subsequent layer Lp which is the second fully-connected layer L_fc2. It shows the matrix of parameters M.2 with its 5 rows r1 to r5 and its 2 columns c1 and c2. As we can see, in the matrix M.2 on right, the rows r1 and r2 have been reordered compared to the left matrix M.2 which is the initial design. The row r1 has taken the position of the row r2, and the row r2 has taken the position of the row r1. In other words, for all the two filters f2.1 and f2.2 that are the two columns c1 and c2, their first and second rows r1, r2 of parameters P have been swapped together. So, the parameters P of row r1 take the second position and the parameter P of row r2 takes the first position. In this in the non-limitative illustrated example, only parts of the parameters P are reordered, as the parameters P of the rows r3, r4 and r5 remain at the same position as illustrated in figure 10 (left and right matrix M.2).

When applying the matrix M.2 (where the rows r1 and r2 have been reordered) to the five input features i_f2.11 to i_f2.15, one obtains two output features o_f2.1 and o_f2.2 as illustrated in figure 9. As we can see, the result is the input feature i_f2.11 is fed correctly with the output feature o_f1.1, and the input feature i_f2.12 is fed correctly with the output feature o_f1.2.

The example of figure 9 illustrates a case where the rows of the matrix M of a subsequent layer, here L_fc2, has been reordered according to the permutation of sets of parameters P of the previous layer Lp, here L_fc1.

It is to be noted that, in a non-limitative embodiment, the input features i_f may come from a previous layer Lp that is a convolutional layer L_cv (and not a fully-connected layer L_fc as described above) and may have been reordered in this convolutional layer L_cv.

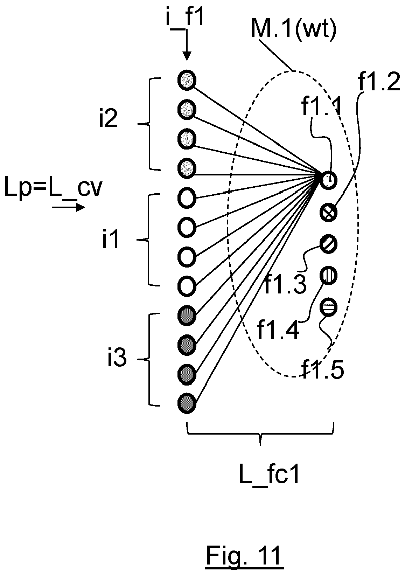

As illustrated in the non-limitative example of figure 11, the first fully connected layer L_fc1 is the subsequent layer Ln.

In this non-limitative embodiment, as illustrated in figure 11, the input features i_f is a flattened vector. If the previous convolutional layer L_cv has tree output feature maps o_ch, each map has 2x2 dimension. These output feature maps o_ch are flattened and fed as input features i_f to the subsequent fully-connected layer L_fc1 as illustrated in the non-limitative example of figure 11. After flattening, the input features i_f are thus twelve in number divided into three groups or sets i1, i2, i3.

In other words, the three sets i1, i2, i3 is a flatten result of a previous layer Lp that is a convolutional layer L_cv that has output channels o_ch with 3x2x2 dimensions.

Hence, if the output feature maps o_ch of the previous convolutional layer L_cv are permuted, the input features i_f of the subsequent fully-connected layer L_fc1 are affected. It is to be noted that compared to figure 7, in figure 11, the input features i_f are swapped in groups (3 groups here). This is due to the flattening of the convolutional layer's output feature maps o_ch.

As illustrated in the non-limitative example of figure 11, compared to figure 6, a first set i1 of input features i_f1 has been swapped with a second set i2 of input features i_f1, a third set i3 of input features i_f1 remaining at the same initial position of figure 6.

Hence, for step E3 above-described, in a second non-limitative embodiment, there is a reordering of the rows of the matrix of parameters M of said subsequent layer Ln according to the permutation of sets s of parameters P of the previous layer Lp. In other words, the parameters P that are associated respectively to the sets i of input feature i_f that have been reorder previously, are reordered accordingly.

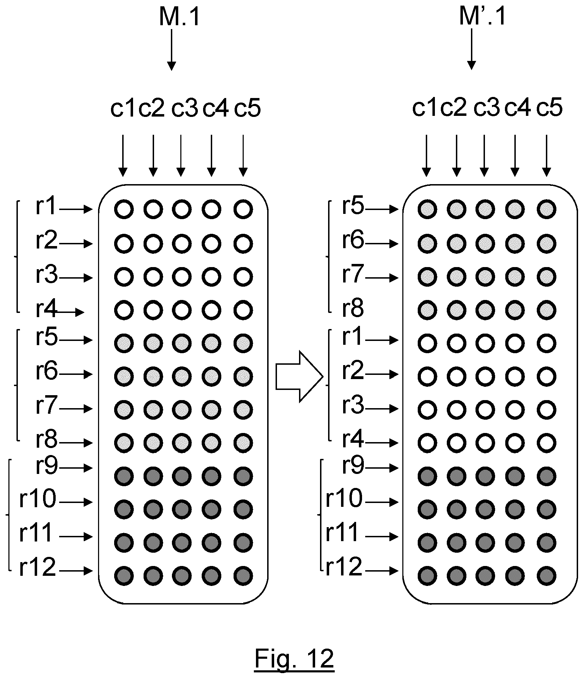

Figure 12 illustrates such a reordering of the rows of the matrix of parameters M of a subsequent layer Ln. It shows the matrix of parameters M.1 with its 12 rows r1 to r12 and its 5 columns c1 to c5. As we can see (with the different gray colors), in the matrix M'.1 on right, the rows r1 to r8 have been reordered compared to the left matrix M.1 which is the initial design. The rows r1 to r4 have taken the positions of the rows r5 to r8. In other words, the parameters (here 20 weights wt) associated with the set i1 of input features i_f1 of figure 11 have been reordered with the parameters (here 20 weights wt) associated with the set i2 of input features i_f1 of figure 11. The last remaining rows r9 to r12 remain at the same positions in the initial design.

For step E4 above-described, when we reach the final layer Lf of the neural network model NN, if it is a fully connected layer L_fc, in order for the final output T2 of the neural network model NN to remain unchanged, we can work out the correct output features o_f order and do a reordering of the output features o_f of the final output tensor t2' (which is the final output T2) to make sure their position matched the initial order in the design of the original neural network model NN and thus remained unchanged. This applies if the steps E1 and E2 have been applied beforehand to this last fully-connected layer(s) L_fc.

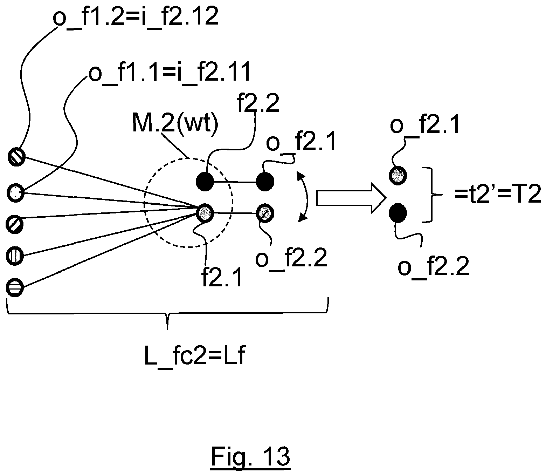

In the non-limitative example of figure 13, the second fully connected layer L_fc2 is the last layer Lf. The final output tensor t2' is composed of the two elements that are output features o_f2.1 and o_f2.2. In order for the final output T2 which is [2] to remain unchanged, the two output features o_f2.1 and o_f2.2 which composed the final output T2 are reordered.

It is to be noted that the same principle of permutation as described in step E1 applies for parameters P that are biases b. In this case, the corresponding matrix of parameters M of a fully-connected layer L_fc is a vector of parameters which is a bias vector composed of a plurality of biases b.

One bias b is related to one filter f of the matrix M of weights wt. Hence, a filter f and a bias b form a pair. It is noted that some filter f may have no associated bias b. Unlike the matrix M of weights wt, the bias vector is applied onto the output features o_f. For the parameters P that are biases b, the matrix of parameters M is a vector of dimension m = [output features o_f]. A bias b is associated with a filter f.

Hence, in a non-limitative example, for the matrix M.1 = [12, 5] there are a bias vector of five bias b (dimension [5]), and for the matrix M.2 = [5.2] there are a bias vector of two bias b (dimension [2]). For the bias vector, there is a permutation of the corresponding biases b within the bias vector alongside the permutation of the at least two filters f that are permuted to match their permutation. In other word, if a filter f in the matrix M of weights wt is permuted, its corresponding bias b is permuted with another bias b.

It is to be noted that there are different types of users that can use the secure computer-implement method 1 :
- (a) a model end-user who downloads a NN model and uses it on his/her machine as an inference model. The model end-user may worry that the NN it runs embeds malware.
- (b) a model distributor who receives NN models from different sources and redistribute them again to his/her customers. The model distributor may worry that the NN models it has received embeds malware.
- (c) a model company who produces the NN models and publishes them, and who wants to prevent its sensitive data from being leaked by a hacker who can be its own employee. The model company may worry that its own employee who develops or retrains a NN model is a hacker who embeds some confidential data or malware into it. So, the model company wants to avoid data leakage if the NN model contain any sensitive data which would damage to the end-user (its customer) ;
- (d) a developer who downloads a NN model and trains it with an own dataset to fine tune the NN model for a specific project/application. The NN model can be a pre-trained NN model. The developer may worry that the source of the NN model he/she downloads is malicious. So, he/she wants to guarantee the safe use of the NN model before retraining the NN model.

Hence, the secure computer-implement method 1 can be used in different cases.

In a first non-limitative use-case, it can be used before retraining the NN model with an own dataset and/or before storing it by the developer.

In a second non-limitative use-case, it can be used before the neural network model NN is distributed to customer(s) by a model distributor.

Distribution is the action of delivering the NN model to customers: automatically (user downloading from repository) or manually (sending by email attachment).

In a third non-limitative use-case, it can be used before the NN model is published by a model producer.

Publishing is the action of the producer/owner of the model to grant the necessary rights to a third party to use/distribute the NN model. It opens the NN model for a group of users to download from a repository (for example Github^{™} repository) or any social media (for example GoogleDrive^{™}) or by sending it by email in non-limitative examples. The repository or social media is then accessible to this group of users. The repository can be private (for internal usage) or public (for outside customers).

In a fourth non-limitative use-case, it can be used by a model end-user when he/she uses the NN model as an inference model, that is to say after the neural network model NN is published.

The use of the secure computer-implement method 1 ensures that the NN model can be safely retrained, used, published, and/or distributed even if it contains malware.

It is to be noted that the secure computer-implement method 1 can work on static model files or models loaded into memory. For static model files, it means a neural network model file that is deployed on repositories such as GitHub^{™}. In a non-limitative example, it is of the type model.tflite^{™} for Tensor Flow lite^{™} model. For models loaded into memory, it means a neural network model read into a RAM (Random Access Memory) of a computer/server or any other type of machines, or a GPU (Graphic Processing Unit) or a TPU (Tensor Processing Unit) which usually will be run by an inference engine.

The three computer-implemented methods described in the following illustrate these three different use-cases above-mentioned.

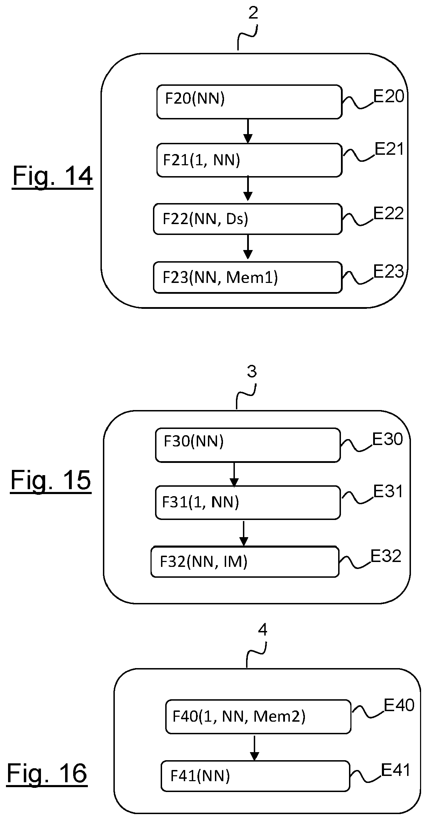

Figure 14 illustrates a first computer-implemented method 2 that comprises the following steps.

In step E20 illustrated F20(NN), a neural network model NN is downloaded. In non-limitative embodiments, it is downloaded from the internet, from a public or private repository onto a computer, or received by email and downloaded onto a computer. It is downloaded by a developer for example. In a non-limitative embodiment, the neural network model NN is a pre-trained model.

In step E21 illustrated F21(1, NN), the secure computer-implemented method 1 is applied on said neural network model NN. Thanks to the secure computer-implemented method 1, the bytes of the malware code are reordered by permuting the sets s of parameters P while preserving the neural network model's computational functions, therefore its performance.

In step E22 illustrated F22(NN, Ds), the neural network model NN is trained with a dataset Ds. If the neural network model NN is a pre-trained model, it means that this step E22 is a retraining of said NN model. In this case, the dataset Ds is the same dataset as the one used for the pre-training, or is another dataset, chosen by the developer for example.

Hence, the permutation is performed before the training of the NN model with a dataset. It destroys any potential threats coming from a pre-trained NN model that could contain malware.

In step E23 illustrated F23(NN, Mem1), the trained neural network model NN is stored in a memory Mem1. In a non-limitative embodiment, the memory Mem1 is within a personal computer/server, such as an EEPROM, a Flash memory in non-limitative examples. In another non- limitative embodiment, the memory Mem1 is a repository either public or private. In another non- limitative embodiment, the memory Mem1 is any storage medium (such as in a non-limitative example a removable hard disk). This trained NN model is also called permuted NN model.

It is to be noted that the NN model architecture definitions, such as layer types (convolutional, fully connected etc.), the layers' configurations, dimensions, input channels/features, output channels/features, follow the original model design. In a non-limitative embodiment, the NN model is saved into a model file format into the memory Mem1. There is no information stored about how the permutation of the weights wt and biases b of the NN model is performed. It is to be noted that the weights wt and biases b definitions are usually stored as data arrays for the NN model parameters. When the permuted NN model is saved, the data arrays of the original NN model are replaced, but only the data arrays' portions permuted (that correspond to the permuted parameters P) are different from the original data arrays. Hence, the permuted NN model is saved with permuted data arrays which are compatible with the NN model architecture definitions. As the permuted NN model works exactly as the original NN model, the hacker doesn't know that some data arrays' portions have been permuted.

Hence, the first computer-implemented method 2 permits to implement the first non-limitative use-case.

Figure 15 illustrates a second computer-implemented method 3 that comprises the following steps.

In step E30 illustrated F30(NN), a neural network NN is downloaded. In non-limitative embodiments, it is downloaded from the internet, from a public or private repository onto a computer, or received by email and downloaded onto a personal computer or server. In a non-limitative embodiment, the neural network model NN is a pre-trained model.

In step E31 illustrated F31(1, NN), the secure computer-implemented method 1 is applied on said neural network model NN. Thanks to the secure computer-implemented method 1, the bytes of the malware code are reordered by permuting the sets s of parameters P while preserving the neural network model's computational functions, therefore its performance.

In step E32 illustrated F32(NN, IM), the neural network model NN is run. It means that it is deployed into an inference machine IM and runs as an inference model.

The inference machine may be any computation unit or device with proper hardware and/or software components to run the NN model. In non-limitative examples, it could be a computer with the NN model runtime software and proper hardware (such a GPU), or an AWS server. It could be a hardware device which communicates with a controller to receive data and send out the final results and accelerate the processing of the inference model.

Hence, the second computer-implemented download method 3 permits to implement the fourth use-case.

Figure 16 illustrates a third computer-implemented method 4 that comprises the following steps.

In step E40 illustrated F40(1, NN, Mem2), the secure computer-implemented method 1 is applied on a neural network model NN stored in a memory Mem2. In a non-limitative embodiment, the neural network model NN is a pre-trained model.

In a non-limitative embodiment, the memory Mem2 is a memory within a server, such as an EEPROM, a Flash memory in. In another non limitative embodiment, the memory Mem2 is a repository either public or private. In another non limitative embodiment, the memory Mem2 is any storage medium.

In step E41 illustrated F41(NN), the neural network model NN is distributed or published.

Hence, the third computer-implemented download method 4 permits to implement the second use-case and third use-case.

A model producer can safely publish its NN model even if an employee has retrained the NN model and embedded some confidential data or malware into it. Hence, the secure computer-implemented method 1 prevents data leakage of a company outside the company if the NN model has sensitive embedded data. A model distributor can safely distribute a NN model it has received from different sources without causing damage to its customers.

It is to be noted that the information of a neural network model NN is stored in the model file. Hence, when downloading a NN model, one has access to this information. This includes all the information required by an inference machine to run the NN model or a developer to further train the NN model, such as the layer types (convolutional, fully connected etc.), the layers' configurations, dimensions, input channel, output channels, weights, biases.

There are different model file formats. In non-limitative examples, there are the "FlatBuffers" format with file extensions: ".tflite" for TensorFlow^{™}, or the ONNX^{™} runtime model format "ORT" with file extension ".ort". PyTorch^{™} uses "TorchScript" format with file extensions like ".pt" or ".pth".

It is to be understood that the present invention is not limited to the aforementioned embodiments and variations and modifications may be made without departing from the scope of the invention. All statements herein reciting principles, aspects, and embodiments of the invention, as well as specific examples thereof, are intended to encompass equivalents thereof. In this respect, the following remarks are made.

Hence, in another non-limitative embodiment, the layer L is a batch-normalization layer L_bn. In this case, the corresponding matrix of parameters M of a batch-normalization layer L_bn is a vector of parameters. In a neural network model NN, a batch-normalization layer L_bn can follow a convolutional layer L_cv or a fully connected layer L_fc. For each filter f of a convolutional layer L_cv there are two corresponding parameters of the batch-normalization layer L_bn, or for each output feature o_f of a fully connected layer L_fc there are two corresponding parameters of the batch-normalization layer L_bn. These two parameters are permuted with other two parameters when the corresponding filter f is permuted with another filter f. It is the same principle of permutation than the one with the biases b. In a non-limitative embodiment, the two parameters are an offset parameter and a scaling parameter. Hence, in another non-limitative embodiment, the neural network model NN is a shallow neural network model.

Hence, some embodiments of the invention may comprise one or a plurality of the following advantages:
- it increases the difficulty level to reassemble the malware code ; indeed, in the non-limitative example of the matrix M.1 with 5 columns, the hacker will have real difficulties to recover the malware from all the possible number (5!) of shuffling permutations,
- it permits to propagate the shuffling through-out the whole neural network model NN while keeping the final results of the neural network model NN unchanged while permuting sets s of parameters P,
- it keeps the computation function of the neural network model NN as it guarantees exactly the same performance as the original neural network model NN that has been initially designed, or a better performance (when retrained for example) as the original neural network model NN,
- it can be combined with other security methods, such as, changing the last significant byte or changing the value of a parameter P,
- there is no need of a NN model retraining for the purpose of removing the embedded malware code, or for changing the less significant bits to remove the embedded malware code, as described in some other solutions. Unlike the invention, these malware removal solutions add uncertainty in the original neural network model's performance,
- It doesn't affect the final output T2 of the NN model as it is the same as the original NN model, neither the output tensors t2 of the different layers L of the NN model as there are the same as the original NN model,
- it increases the difficulty of a hacker to steal some sensitive data embedded inside the NN model with the help of malware embedded in the NN model.

## Claims

1. Secure computer-implemented method (1) for preventing a recovery of embedded data (d) within an neural network model (NN), said neural network model (NN) comprising a plurality of layers (L), each layer (L) having a related matrix of parameters (M) and being configured to receive at least one input tensor (t1), wherein said secure computed implemented method (1) comprises:
- for at least one layer (L), permuting sets (s) of parameters (P) within its related matrix of parameters (M) so as to change their initial positions (p) in said matrix of parameters (M),
- applying said matrix of permuted parameters (M') to the at least one input tensor (t1) so as to generate an output tensor (t2').

2. Secure computer-implemented method (1) according to claim 1, wherein the permutation of set(s) of parameters (P) is performed for a plurality of layers (L).

3. Secure computer-implemented method (1) according to any of the preceding claims, wherein said output tensor (t2') is an intermediate output tensor to be fed as an input tensor (t1) to a subsequent layer (Ln) or is a last output tensor of a last layer (Lf) of said neural network model (NN).

4. Secure computer-implemented method (1) according to any of the preceding claims, wherein a set (s) of parameters (P) comprises one or a plurality of parameters (P), a set (s) of parameters (P) being of the type of a weight (wt).

5. Secure computer-implemented method (1) according to any of the preceding claims, wherein a set (s) of parameters (P) comprise one or a plurality of parameters (P), a set (s) of parameters (P) being of the type of a bias (b).

6. Secure computer-implemented method (1) according to any of the preceding claims, wherein said computer-implemented method (1) further comprises reordering the parameters (P) of a matrix of parameters (M) related to a subsequent layer (Ln) according to the permutation of sets (s) of parameters (P) of a previous layer (Lp), before applying said matrix of parameters (M) to said at least one input tensor (t1) of said subsequent layer (Ln).

7. Secure computer-implemented method (1) according to any of the preceding claims, wherein when the last layer(s) (Lf) of said neural network model (NN) is configured to generate a last output tensor (t2') with a plurality of elements, said secure computer-implemented method (1) further comprises re-ordering the sets (s) of parameters (P) of the matrix of parameters (M) of the last layer(s) (Lf) so that the elements of the output tensor (t2') generated by this last layer(s) (Lf) have a same ordering as an initial ordering.

8. Secure computer-implemented method (1) according to any of the preceding claims, wherein the layers (L) are convolutional layers (L_cv), or fully connected layers (L_fc), or batch-normalization layers (L_bn), or any combination of these different types of layers (L).

9. Secure computer-implemented method (1) according to any of the preceding claims 4 or 6 to 8, wherein the related matrix of parameters (M) of a convolutional layer (L_cv) is of dimension [filters (f), input channels (i_ch), kernelₖ, with k = 2 to N, N integer], a filter (f) comprising a plurality of slices (q), said filter (f) comprising a dimension [input channels (i_ch), kernel₁, kernel₂, ...].

10. Secure computer-implemented method (1) according to the preceding claim, wherein when a layer (L) is a convolutional layer (L_cv), a set (s) of parameters (P) is a filter (f) and the permutation of sets (s) of parameters (P) is performed by permuting at least two filters (f) of the matrix of parameters (M).

11. Secure computer-implemented method (1) according to the preceding claim combined with claim 6, wherein when a layer (L) is a convolutional layer (L_cv), the reordering of the parameters (P) of a matrix of parameters (M) related to a subsequent layer (Ln) is performed by re-ordering the slices (q) of the filters (f) of said subsequent layer (Ln) according to the re-ordering of output channels (o_ch) of the output tensor (t2') of the previous layer (Lp).

12. Secure computer-implemented method (1) according to any of the preceding claims 4 or 6 to 8, wherein for a fully connected layer (L_fc), the matrix of parameters (M) is of dimension [n, m], with n a number of rows corresponding to a number of input features (i_f) of said fully connected layer (L_fc) and m a number of columns corresponding to a number of output features (o_f) of said fully connected layer (L_fc), with the total number of parameters (P) being n x m , each output feature (o_f) being obtained by filtering said input features (i_f) by one of m filters (f) of dimension [n, 1].

13. Secure computer-implemented method (1) according to the preceding claim, wherein when a layer (L) is a fully connected layer (L_fc), the permutation of sets (s) parameters (P) is performed by permuting at least two of the m filters (f) which leads to a permutation of output features (o_f).

14. Secure computer-implemented method (1) according to the preceding claim combined with claim 6, wherein when a layer (L) is a fully connected layer (L_fc), the reordering of the parameters (P) of a matrix of parameters (M) related to a subsequent layer (Ln) is the re-ordering of the rows of said matrix of parameters (M), according to the permutation of sets (s) of parameters (P) of a previous layer (Lp).

15. First computer-implemented method (2), wherein said first computer-implemented method (2) comprises :
- downloading a neural network model (NN),
- applying said secure computer-implemented method (1) according to any of the preceding claims 1 to 14 on said neural network model (NN),
- training said neural network model (NN),
- stored said trained neural network model (NN) in a memory (Mem1).

16. Second computer-implemented method (3), wherein said second computer-implemented method (3) comprises :
- downloading a neural network (NN),
- applying said secure computer-implemented method (1) according to any of the preceding claims 1 to 14 on said neural network (NN),
- running said neural network model (NN).

17. Third computer-implemented method (4), wherein said third computer-implemented method (3) comprises :
- applying said secure computer-implemented method (1) according to any of the preceding claims 1 to 14 on a neural network (NN) that is stored in a memory (Mem2),
- distributing or publishing said neural network model (NN).
